# EUROPÄISCHE PATENTSCHRIFT

(11) **EP 2 601 581 B1**
(45) Veröffentlichungstag und Bekanntmachung des Hinweises auf die Patenterteilung: **31.08.2016**
(21) Anmeldenummer: 11733633.9
(22) Anmeldetag: 07.07.2011
(51) Int. Cl.: G06F 11/10

(54) **SPEICHERKONTROLLELEMENT UND ZUGEHÖRIGES KONFIGURATIONSVERFAHREN**
MEMORY CONTROL ELEMENT AND ASSOCIATED CONFIGURATION METHOD
ÉLÉMENT DE CONTRÔLE DE MÉMOIRE ET PROCÉDÉ DE CONFIGURATION ASSOCIÉ

(30) Priorität: 05.08.2010 AT 13262010
(43) Veröffentlichungstag der Anmeldung: 12.06.2013
(73) Patentinhaber: Siemens AG Österreich, 1210 Wien (AT)
(72) Erfinder: EPPENSTEINER, Friedrich, A-3620 Spitz (AT); GHAMESHLU, Majid, A-1110 Wien (AT); TAUCHER, Herbert, A-2340 Mödling (AT)
(74) Vertreter: Maier, Daniel Oliver
(86) Internationale Anmeldenummer: PCT/EP2011/061457
(87) Internationale Veröffentlichungsnummer: WO 2012/016781

(56) Entgegenhaltungen:
- US-A1- 2009 070 647
- US-A1- 2010 185 897

## Beschreibung

### Technisches Gebiet

Die vorliegende Erfindung bezieht sich allgemein auf das Gebiet der Computertechnik und ihrer elektronischen Bauelemente und Module. Die vorliegende Erfindung betrifft dabei ein Speicherkontrollelement, welches in einem Computersystem einsetzbar ist, und welches auf einer ersten Seite zumindest eine Nutzerschnittstelle mit zugehöriger Ansteuerschaltung und auf einer zweiten Seite eine Schnittstelle mit Protokollhandhabung für eine Anbindung von zumindest einem Speicherelement des Computersystems umfasst. Bei dem Speicherkontrollelement ist für eine Zugriffskontrolle auch eine digitale Schaltung für eine Zuteilung von Zugriffsressourcen - ein sogenannter Arbiter - vorgesehen. Weiters betrifft die Erfindung ein zugehöriges Verfahren zur Konfiguration des erfindungsgemäßen Speicherkontrollelements.

### Stand der Technik

Das Gebiet der Computertechnik, welches beispielsweise Bereiche wie Digitaltechnik und Mikroelektronik umfasst, beschäftigt sich mit Konzeption und Aufbau von informations- bzw. Daten verarbeitenden Anlagen oder Systemen - so genannten Computern oder Computersystemen. In einem Computersystem werden von einer sogenannten Central Processing Unit (CPU) Programme, Befehle (z.B. Code-Anteile) und/oder zu Programmen gehörende Nutzdaten abgearbeitet, welche die Basis für vom Computersystem zur Verfügung gestellte Applikationen bilden, oder anderen Peripherie-Einheiten (z.B. Netzwerkkarten, Soundkarten, etc.) via einem so genannten Direct Memory Access-Controller (DMA-Controller) auf Programme und/oder zu verarbeitende Nutzdaten zugegriffen.

Diese Programme als auch die zu verarbeitenden Nutzdaten werden als Daten in einem Speicherelement - dem so genannten Arbeitsspeicher - abgelegt, um zu einem späteren Zeitpunkt abgerufen werden zu können. Im Unterschied zu einem permanenten, nicht flüchtigen Speicherelement (z.B. EPROM, EEPROM, etc.) kann auf den Arbeitsspeicher zwar ein ungleich schnellerer Zugriff durch z.B. CPU oder DMA-Controller erfolgen, allerdings weist der Arbeitsspeicher nicht die Fähigkeit auf, dass Daten bei einer Stromunterbrechung erhalten bleiben. Als Arbeitsspeicher werden heutzutage beispielsweise Speicherelemente wie z.B. DDR2- oder DDR3-SDRAM oder mobile DDR Speicherelemente eingesetzt, welche eine rasche Verarbeitung von Daten ermöglichen. Dabei steht die Abkürzung DDR für Double Data Rate und SDRAM für Synchronous Dynamic Random Access Memory.

Für eine Regelung eines Datenflusses zwischen einem Speicherelement wie einen Arbeitsspeicher und einer oder mehrere Einheiten wie z.B. CPUs, Peripherie-Einheiten via DMA, wird in einem Computersystem üblicherweise ein Speicherkontrollelement verwendet, welches auch als Memory Controller bezeichnet wird. Das Speicherkontrollelement stellt dabei ein eigenes Modul dar und umfasst Funktionen, um den Arbeitsspeicher (z.B. DRAM, DDR-SDRAM, etc.) zu lesen und zu beschreiben. Vom Speicherkontrollelement wird auch für eine ständige Aktualisierung des Arbeitsspeichers, für den so genannten Refresh, gesorgt, da sonst die Daten im flüchtigen Arbeitsspeicher verloren gehen würden.

Für die Regelung der Zugriffe auf den Arbeitsspeicher weist das Speicherkontrollelement eine eigene digitale Schaltung für eine Zuteilung von Zugriffsressourcen auf - den so genannten Arbiter oder die sogenannte Arbiterlogik. Vom Arbiter werden Zugriffskonflikte oder -kollisionen gelöst und priorisiert. Das ist beispielsweise notwendig, wenn über das Speicherkontrollelement mehrere Einheiten wie z.B. CPUs, DMA-Controller, etc. als so genannte Master - d.h. aktiv - auf ein Speicherelement wie den Arbeitsspeicher zugreifen dürfen.

Von der digitalen Schaltung für eine Zuteilung von Zugriffsressourcen bzw. vom Arbiter wird dann entschieden, welchem Master dann Zugriff erteilt wird. Unter Arbitrierung wird daher eine Zuteilung von Zugriffsressourcen (z.B. Kommunikationskanäle, Datenbus, Bussysteme, etc.) auf die verschiedenen Master-Einheiten verstanden. Der Arbiter ist damit eine Instanz innerhalb des Speicherkontrollelements, von welchem geregelt wird, welche Hardware einen Datenkanal (den so genannten Bus) als nächstes nutzen darf.

Die Master-Einheiten - d.h. CPUs und/oder DMA-Controller von Peripherie-Einheiten - sind auf einer ersten Seite über Nutzerschnittstellen mit zugehörigen Ansteuerschaltungen - den so genannten User Ports - an das Speicherkontrollelement angeschlossen. Auf einer zweiten Seite weist das Speicherkontrollelement eine Verbindung über eine Schnittstelle mit Protokollhandhabung zu einem oder mehreren Speicherelemente bzw. zum Arbeitsspeicher auf.

Einerseits kann eine zunehmende Integration von Funktionalitäten in immer kleiner werdende Halbleiter-Strukturen bzw. Bauteile, von welchen Einheiten wie z.B. CPU, Memory Controller, Arbeitsspeicher, etc. eines Computersystems gebildet werden, beispielsweise eine Wahrscheinlichkeit von Fehler erhöhen. Vor allem kann dies zu transienten Datenverfälschungen insbesondere innerhalb von Speicherelementen wie z.B. Arbeitsspeichern führen. Derartige Datenverfälschungen können beispielsweise durch kosmische Strahlung und/oder Elektromigration ausgelöst werden. Dabei können Datenverfälschungen zu Fehlern wie z.B. so genannten Ein-Bit-Fehlern, Mehrfachfehlern, etc. bei in Arbeitsspeichern abgelegten Daten und/oder bei Daten (z.B. Code-Anteilen) bei Übertragung in den Arbeitsspeicher führen.

Andererseits werden insbesondere an sicherheitsrelevante Computersysteme und Applikationen wie z.B. in der Automobilindustrie, in der Luftfahrt, etc. immer strengere Anforderungen an eine Datensicherheit gestellt. Vor allem sicherheitsrelevante Daten müssen mit hoher Zuverlässigkeit bzw. möglichst geringer Fehlerrate übertragen und gespeichert werden. Dazu werden beispielsweise in der internationalen Normung gemäß IEC 61508 so genannte Sicherheitsanforderungsstufen oder Sicherheits-Integritätslevel (SIL) definiert. Aus den jeweils angestrebten Sicherheits-Integritätslevels ergeben sich sicherheitsgerichtete Prinzipien, welche für eine Minimierung eines Risikos von Fehlfunktionen eingehalten werden müssen. Die IEC 61508 ist dabei eine internationale Norm zur Entwicklung von elektrischen, elektronischen und programmierbar elektronischen Systemen, von welchen eine Sicherheitsfunktion ausgeführt wird, und wird von der Internationalen Electrotechnical Commission (IEC) herausgegeben. Bei sicherheitsrelevanten Systemen bzw. Applikationen wird beispielsweise angestrebt, die Anforderungen der so genannten SIL3 oder SIL4 der IEC 61508 zu erfüllen.

Zum Erkennen bzw. Korrigieren von Datenfehlern wie Ein-Bit-Fehler, welche unabhängig voneinander festgestellt werden, werden beispielsweise Verfahren wie das Error Correction Code-Verfahren (ECC-Verfahren) eingesetzt. Das ECC-Verfahren ist ein Fehlerkorrektur-Alogrithmus, welcher in Speicherelementen zur Absicherung gegen Datenverfälschung eingesetzt wird. Dabei werden üblicherweise Ein-Bit-Fehler beim Lesen der Daten erkannt und bei einer Übergabe an einen zugreifenden Master korrigiert. Zusätzlich können mit diesem Verfahren auch Mehrfachfehler festgestellt werden. Allerdings entspricht ein Erkennen von Mehrfachfehlern in den Daten zu einem Zeitpunkt, zu welchen diese bereits von einer Applikation benötigt werden, nicht den hohen Sicherheitsanforderungen für sicherheitsrelevante Systeme bzw. Applikationen, da auf die aufgetretenen Fehlerzustände nicht mehr entsprechend rasch genug reagiert werden kann. So kann beispielsweise nicht mehr entsprechend schnell ein Systemwechsel in einen sicheren Zustand vorgenommen werden.

Eine ähnliche Problematik ergibt sich bei einem Hochlaufen eines Computersystems oder einer Applikation. Dabei werden Code- bzw. Programm-Anteile von einem permanenten Speicher (z.B. EEPROM, etc.) in einen flüchtigen Speicher (z.B. DRAM, DDR-SDRAM, etc.) kopiert. Bei sicherheitsrelevanten bzw. - konformen Systemen werden dabei für eine Fehlerüberprüfung der übertragenen Code-Anteile beispielsweise Softwareroutinen eingesetzt. Von diesen Softwareroutinen werden die Code-Anteile z.B. beim Hochlaufen periodisch ausgelesen und mittels einer zyklischen Redundanzprüfung - dem so genannten Cyclic Redundancy Check (CRC) - auf Ein-Bit- und Mehrfachfehler geprüft. Der CRC ist dabei so ausgelegt, dass Fehler bei der Übertragung von Daten mit hoher Wahrscheinlichkeit entdeckt werden. Dabei wird von der Softwareroutine z.B. ein so genannter CRC-Block gebildet und mit einem vorgegebenen CRC-Sollwert verglichen. Allerdings führt dieses Verfahren dazu, dass die Performance des Computersystems, insbesondere der CPU reduziert wird und Kommunikationskanäle des Systems - insbesondere bei so genannten Einchipsystemen, bei welchen alle oder ein großer Teil der Systemfunktionen auf einer Plattform bzw. einem Chip integriert sind, erheblich belastet werden.

Die Veröffentlichung US-A-2010/0185897 entspricht dem Präambel des Patentanspruchs 1.

### Darstellung der Erfindung

Der Erfindung liegt daher die Aufgabe zugrunde, ein Speicherkontrollelement gemäß Anspruch 1, welches in einem Computersystem einsetzbar ist, sowie ein zugehöriges Verfahren zur Konfiguration des Speicherkontrollelements anzugeben, durch welche auf einfache Weise eine rechtzeitige Überprüfung von Daten bzw. vorgegebenen Datenbereichen auf Speicher-Inhalt-Verfälschungen unter Erfüllung hoher Sicherheitsanforderungen und ohne Verringerung der Performance ermöglicht werden.

Die Lösung dieser Aufgabe erfolgt durch ein Speicherkontrollelement der eingangs angegebenen Art, wobei eine zusätzliche Sicherheitsschnittstelle zu einer Überprüfungsschaltung vorgesehen ist, welche dazu eingerichtet ist, Daten (z.B. gespeicherte Daten, gespeicherte Code-Anteile, etc.) auf Verfälschungen, insbesondere auf sogenannte transiente Verfäl-schungen und Fehler (z.B. Mehrfachfehler, CRC-Block-Fehler, etc.), welche beide innerhalb von Speicherbausteinen auftreten können, zu überprüfen, festgestellte Fehler zu korrigieren und/oder bei Überschreiten einstellbarer Fehlerschwellen einen Systemwechsel in einen sicheren Zustand zu veranlassen.

Der Hauptaspekt der erfindungsgemäß vorgeschlagenen Lösung besteht darin, dass Speicherinhalte wie z.B. Daten, Code-Anteile, etc. bereits frühzeitig auf ihre Konsistenz geprüft werden. Verfälschungen, welche beispielsweise durch Elektromigration, kosmische Strahlungen, etc. entstehen und zu Fehler von Speicherinhalten (z.B. Ein-Bit-Fehler, Mehrfachfehler, CRC-Block-Fehler, etc.) führen können, werden bereits von der Hardware erkannt und damit ein mögliches Fehlverhalten von Applikationen oder des Systems frühzeitig identifiziert. Auf diese Weise kann durch Verwendung des erfindungsgemäßen Speicherkontrollelements die System-Performance stabil gehalten oder sogar insgesamt erhöht werden. Zusätzlich werden auch hohe Sicherheitsanforderungen wie z.B. Sicherheits-Integritätslevel (SIL) 2, 3 oder 4 nach der internationalen Normung gemäß IEC 61508 besser erfüllt, da einzelne Fehler wie z.B. Ein-Bit-Fehler korrigiert werden können bzw. das jeweilige System bei Fehler wie z.B. zahlreichen Ein-Bit-Fehlern, Mehrfachfehlern, CRC-Blockfehlern rascher in einen sicheren Zustand geschaltet werden kann.

Es ist vorteilhaft, wenn ein einstellbares Speicheradressfenster vorgesehen ist, innerhalb welchem Daten bzw. Code-Anteile für die Sicherheitsschnittstelle und die Überprüfungsschaltung als überprüfbar eingestellt sind. Damit wird der Sicherheitsschnittstelle und dem zugehörigen Überprüfungsschaltung ein Speicherbereich vorgegeben, innerhalb welchem Daten und/oder Code-Anteile, welche beispielsweise beim Hochlaufen eines Systems von einem permanenten Speicherelement (z.B. EEPROM, etc.) auf ein flüchtige Speicherelement (z.B. DRAM, DDR-SRAM, etc.) kopiert werden, auf Verfälschungen und/oder Fehler wie z.B. 1-Bit-Fehler, Mehrfachfehler, CRC-Block-Fehler, etc. geprüft werden. Damit kann die Überprüfung auf einfache Weise auf sicherheitsrelevante Daten und/oder Code-Anteile eingeschränkt werden.

Es ist auch günstig, wenn bei Überschreiten einer der einstellbaren Fehlerschwellen ein Alarm auslösbar ist. Damit können bei Einsatz des erfindungsgemäßen Speicherkontrollelement in einem System auf einfache Weise verschiedene Sicherheitsanforderungen wie z.B. Sicherheits-Integritätsstufen (z.B. SIL2, SIL3, etc.) besser erreicht werden.

Bei einer bevorzugten Ausbildungsform des erfindungsgemäßen Speicherkontrollelements ist vorgesehen, dass eine Zeitdauer für die Überprüfung des Speicheradressfensters bei der Sicherheitsschnittstelle und der zugehörigen Überprüfungsschaltung einstellbar ist. Durch ein Einstellen der Zeitdauer, innerhalb welcher die Überprüfung des vorgegebenen Speicherbereichs üblicherweise periodisch abgeschlossen werden soll, können ebenfalls verschiedene Sicherheitsanforderungen wie z.B. Sicherheits-Integritätsstufen (z.B. SIL2, SIL3, etc.), welche z.B. bei sicherheitsrelevanten System in Bereichen wie beispielsweise Automobilindustrie, Industrie oder Luftfahrt wichtig sind, besser erreicht werden. Zusätzlich werden auf diese Weise Verfälschungen und Fehler in sicherheitsrelevanten Daten und/oder Code-Anteilen frühzeitig erkannt. Vom System kann damit rasch reagiert und in einen sicheren Zustand geschaltet werden.

Dabei ist es in weiterer Ausgestaltung des erfindungsgemäßen Speicherkontrollelements auch günstig, wenn die Überprüfung des Speicheradressfensters von der Sicherheitsschnittstelle und der zugehörigen Überprüfungsschaltung periodisch ausführbar ist.

Die Lösung der angeführten Aufgabe erfolgt auch durch ein Verfahren gemäß Anspruch 4, durch welches das erfindungsgemäße Speicherkontrollelement auf einfache Weise konfigurierbar ist, wobei die Zeitdauer der Überprüfung des Speicheradressfensters als Sollwert, welcher beispielsweise aus den vorgegebenen Sicherheitsanforderungen für ein System abgeleitet wird, in der Sicherheitsschnittstelle und der zugehörigen Überprüfungsschaltung eingestellt wird. Der Sollwert wird dann z.B. im Betrieb dazu herangezogen, eine geeignete Priorität für die Zuteilung von Zugriffsressourcen - einen sogenannte Arbiter-Priorität - für die Sicherheitsschnittstelle und die zugehörige Überprüfungsschaltung zu ermitteln.

Der Hauptaspekt des Verfahrens zur Konfiguration des erfindungsgemäßen Speicherkontrollelement besteht darin, dass bei nicht vollständig bekanntem Verhalten von Applikationen in einem System ein Sollwert für die Zeitdauer der Überprüfung vorgegeben wird. Dieser Sollwert wird z.B. aus Sicherheitsvorgaben und -anforderungen für das System abgeleitet und soll die Performance des Systems möglichst wenig beeinträchtigt bzw. nur geringfügig beeinflussen. Von der Sicherheitsschnittstelle und der zugehörigen Überprüfungsschaltung werden dabei versucht, in einem ersten Schritt mit der niedrigsten Arbiter-Priorität den Sollwert der Zeitdauer für die Überprüfung zu erreichen. Wird der Sollwert der Zeitdauer mit dieser Arbiter-Priorität nicht erzielt, so wird die Arbiter-Priorität selbstständig von der Schnittstelle bzw. der zugehörigen Überprüfungsschaltung solange adaptiert bis der Sollwert eingehalten wird.

In einen weiteren Ausführung kann es für die Konfiguration des Speicherkontrollelements auch vorteilhaft sein, wenn eine maximale Zeitdauer für die Überprüfung des Speicheradressfensters aus Rahmenbedingungen, insbesondere Sicherheitsvorgaben, abgeleitet wird. Dann werden auf Basis von empirischen Tests bzw. Untersuchungen Applikationsabläufen und Abritrierungseigenschaften der Sicherheitsschnittstelle und der zugehörigen Überprüfungsschaltung abgeschätzt und daraus die geeignete Priorität für die Zuteilung von Zugriffsressourcen, also eine entsprechende Arbiter-Priorität, für die Sicherheitsschnittstelle und die zugehörige Überprüfungsschaltung bestimmt. Diese Arbiter-Priorität wird dann im erfindungsgemäßen Speicherkontrollelement parametriert.

Dadurch kann die Zeitdauer für die Überprüfung auf ideale Weise an die Rahmenbedingungen für das jeweilige System wie z.B. Sicherheitsvorgaben, Verhalten von Applikationen im System, Arbitrierungseigenschaften der Sicherheitsschnittstelle und der zugehörigen Überprüfungsschaltung etc. angepasst werden. Aus den Rahmenbedingungen und Eigenschaften kann dann auf einfache Weise eine Arbiter-Priorität für die Sicherheitsschnittstelle und die zugehörige Überprüfungsschaltung ermittelt werden, bei welcher die ermittelte maximale Zeitdauer für die Überprüfung sicher eingehalten wird. Diese Arbiter-Priorität wird dann beim erfindungsgemäßen Speicherelement fest parametriert. Die Zeitdauer der Überprüfung wird damit indirekt über die Arbiter-Priorität der Sicherheitsschnittstelle und der zugehörige Überprüfungsschaltung eingestellt. So können einerseits die Sicherheitsvorgaben besser erreicht und andererseits eine Beeinflussung der System-Performance durch das erfindungsgemäße Speicherkontrollelement möglichst niedrig gehalten werden. Es besteht auch die Möglichkeit, bei dieser Konfigurationsmethode die Anforderungen und Einstellungen für Daten- und Code-Überprüfung getrennt voneinander durchzuführen.

### Kurzbeschreibung der Zeichnung

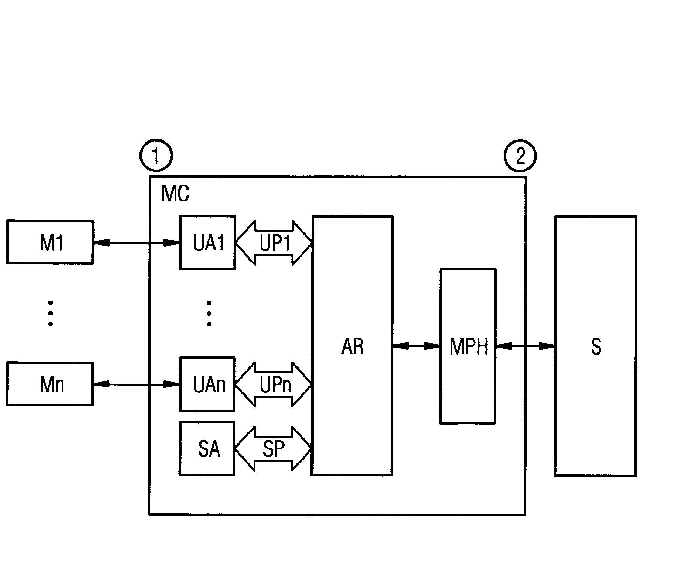

Die Erfindung wird nachfolgend in beispielhafter Weise anhand der beigefügten Figur 1 erläutert, welche beispielhaft und schematisch einen Aufbau des erfindungsgemäßen Speicherkontrollelements zeigt.

### Ausführung der Erfindung

In der Figur 1 ist schematisch und beispielhaft ein Speicherkontrollelement MC dargestellt, welches eine digitale Schaltungen und Elemente umfasst, um einen Datenfluss von und zu einem Speicherelement S zu steuern. Das Speicherkontrollelement MC kann dabei als eigener integrierter Schaltkreis bzw. Chip ausgeführt oder in einen anderen integrierten Schaltkreis bzw. Chip integriert sein.

Für ein Management von Lese- und Schreibzugriffen auf ein Speicherelement S weist das Speicherkontrollelement MC eine digitale Schaltung AR für eine Zuteilung von Zugriffsressourcen (z.B. Kommunikationskanäle, Datenbus, Bussystem, etc.) auf. Diese digitale Schaltung AR wird beispielsweise auch als so genannter Arbiter oder Arbitrierungslogik bezeichnet, durch welche Zugriffskonflikt oder Zugriffkollisionen auf das Speicherelement S gelöst oder priorisiert werden. Dazu werden vom Arbiter AR beispielsweise so genannte Arbiter-Prioritäten für auf das Speicherelement S zugreifende Master-Einheiten M1 bis Mn wie z.B. CPUs, DMA-Controller von Peripherie-Einheiten, etc. vergeben. Die digitale Schaltung AR bzw. der Arbiter AR ist damit eine Instanz innerhalb des Speicherkontrollelements MC, von welchem geregelt wird, von welcher Hardware- bzw. Master-Einheit M1 bis Mn ein Kanal für Datenübertragungen von/zum Speicherelement S als nächstes genutzt werden darf.

Die Master-Einheiten M1 bis Mn wie z.B. CPUs, DMA-Controller sind auf einer ersten Seite 1 des Speicherkontrollelements MC über Nutzerschnittstellen UP1 bis UPn mit zugehörigen Ansteuerschaltungen UA1 bis UAn anschließbar. Von den Nutzerschnittstellen UP1 bis UPn mit zugehörigen Ansteuerschaltungen UA1 bis UAn werden die Master-Einheiten M1 bis Mn mit dem Arbiter AR des Speicherkontrollelements MC verbunden. Die Nutzerschnittstellen UP1 bis UPn mit zugehörigen Ansteuerschaltungen UA1 bis UAn werden auch als so genannte User Port des Speicherkontrollelements MC bezeichnet, welche Hardware-Schnittstellen darstellen, welche via Kommunikationskanälen (z.B. Bussystem, etc.) über so genannte Port-Adressen angesprochen werden. Für die Zugriffskontrolle auf den Speicher werden die Nutzerschnittstellen UP1 bis UPn mit zugehörigen Ansteuerschaltungen UA1 bis UAn vom Arbiter AR nach verschiedenen Verfahren (z.B. Prioritäten, Round Robin, etc.) arbitriert.

Auf einer zweiten Seite 2 weist das Speicherkontrollelement MC eine Verbindung über eine Schnittstelle MPH mit Protokollhandhabung zu zumindest einem Speicherelement S auf. Dieses Speicherelement S ist üblicherweise ein so genannter flüchtiger Speicher wie z.B. DRAM, DDR-SDRAM, etc., welche beispielsweise als so genannte Arbeitsspeicher in Computersystemen verwendet werden.

Zusätzlich weist das Speicherkontrollelement MC ein Sicherheitsschnittstelle SP mit zugehöriger Überprüfungsschaltung SA auf. Dabei wird von der Sicherheitsschnittstelle SP mit zugehöriger Überprüfungsschaltung SA, die mit der digitalen Schaltung AR für eine Zuteilung von Zugriffsressourcen verbunden ist, an der Arbitrierung um das Speicherelement S teilgenommen. Die Sicherheitsschnittstelle SP sowie die zugehöriger Überprüfungsschaltung SA sind dazu eingerichtet, Daten und/oder Code-Anteile auf beispielsweise transiente Verfälschungen und Fehler (z.B. Ein-Bit-Fehler, Mehrfachfehler, CRC-Block-Fehler zu überprüfen.

Dabei kann ein einstellbares Speicheradressfenster vorgegeben sein, innerhalb welchem Daten und/oder Code-Anteile von der Sicherheitsschnittstelle SP mit zugehöriger Überprüfungsschaltung SA üblicherweise periodisch geprüft werden. D.h. es kann ein Adressbereich - das Speicheradressfenster - des Speicherelements S definiert sein, in dem beispielsweise sicherheitsrelevante Daten und/oder Code-Anteile gespeichert sind. Diese Daten werden dann von der Sicherheitsschnittstelle SP bzw. der zugehöriger Überprüfungsschaltung SA auf Fehler untersucht. Bei Daten können dann beispielsweise bei der Überprüfung durch die Sicherheitsschnittstelle SP mit zugehöriger Überprüfungsschaltung SA gefundene Ein-Bit-Fehler korrigiert werden. Dadurch wird verhindert, dass diese später zu Mehrfachfehlern führen. Eine hohen Anzahl von Ein-Bit-Fehlern oder festgestellte Mehrfachfehler werden von der Sicherheitsschnittstelle SP mit zugehöriger Überprüfungsschaltung SA nicht mehr korrigiert, sondern es wird bei Überschreiten von einstellbaren Fehlerstellen ein Systemwechsel in einen sicheren Zustand veranlasst. Ebenso führen CRC-Block-Fehler bei der Überprüfung von Code-Anteilen durch die Sicherheitsschnittstelle SP mit zugehöriger Überprüfungsschaltung SA zu einem Systemwechsel in einen sicheren Zustand. Zusätzlich kann bei Überschreiten eine der einstellbaren Fehlerschwellen im Speicherkontrollelement MC auch vorgesehen sein, dass dadurch ein Alarm ausgelöst wird.

Zusätzlich kann bei der Sicherheitsschnittstelle SP mit zugehöriger Überprüfungsschaltung SA des erfindungsgemäßen Speicherkontrollelements MC vorgesehen sein, dass eine Zeitdauer - eine so genannte Check-Periode - für die - üblicherweise periodische - Überprüfung des Speicheradressfenster einstellbar ist. Diese Zeitdauer kann mittels eines Verfahrens zur Konfiguration des Speicherkontrollelements MC aus einer Abschätzung des Verhaltens von Applikationen und aus Rahmenbedingungen (z.B. Sicherheitsvorgaben) für das Computersystem, in welchem das Speicherkontrollelements MC eingesetzt wird, ermittelt werden.

Ist beispielsweise das Verhalten der Applikationen, welche auf dem Computersystem ablaufen, nicht vollständig bekannt oder abschätzbar, so wird die für die Überprüfung erforderliche Zeitdauer bzw. Check-Periode als Sollwert in der Sicherheitsschnittstelle SP mit zugehöriger Überprüfungsschaltung SA eingestellt, wobei dieser Sollwert aus den Sicherheitsvorgaben und -anforderungen für das Computersystem abgeleitet wird. In weiterer Folge wird auf Basis des Sollwerts eine geeignete Arbiter-Priorität für die Sicherheitsschnittstelle SP mit zugehöriger Überprüfungsschaltung SA ermittelt. Dabei wird von der Sicherheitsschnittstelle SP mit zugehöriger Überprüfungsschaltung SA bei der Überprüfung von Daten und/oder Code-Anteilen zuerst versucht, mit der niedrigsten Arbiter-Priorität den Sollwert der Check-Periode zu erreichen. Wird der Sollwert nicht eingehalten, so wird von der Sicherheitsschnittstelle SP mit zugehöriger Überprüfungsschaltung SA die Arbiter-Priorität selbsttätig solange erhöht bis der Sollwert für die Zeitdauer bzw. Check-Periode erreicht wird. Die niedrigste Arbiter-Priorität als Start-Priorität bzw. eine sukzessive Steigerung der Arbiter-Priorität der Sicherheitsschnittstelle SP mit zugehöriger Überprüfungsschaltung SA wird deshalb gewählt, damit eine Performance des Computersystems möglichst gering beeinflusst wird.

Ist das Applikationsverhalten im Echtbetrieb des Computersystems mit dem erfindungsgemäßen Speicherkontrollelement MC gut vorsagbar bzw. abschätzbar oder wurde dieses anhand von z.B. Test und/oder empirischen Untersuchungen ermittelt, so kann daraus beispielsweise eine maximale Zeitdauer für die Überprüfung des Speicheradressfensters aus Rahmenbedingungen wie z.B. Sicherheitsvorgaben abgeleitet werden. Dabei werden Abläufe von Applikationen unter Einhaltung aller auftretenden so genannten Corner Cases sowie verschiedene Arbitrierungseigenschaften der Sicherheitsschnittstelle SP und der zugehöriger Überprüfungsschaltung SA berücksichtigt. Daraus wird dann eine geeignete Arbiter-Priorität für die Sicherheitsschnittstelle SP und die zugehöriger Überprüfungsschaltung SA bestimmt, bei welcher die ermittelte maximale Zeitdauer für die Überprüfung (Check-Periode) sicher eingehalten werden kann. Diese Arbiter-Priorität wird dann für einen Echtbetrieb im Speicherkontrollelement MC bzw. in der Sicherheitsschnittstelle SP mit zugehöriger Überprüfungsschaltung SA fest parametriert. Für den Fall, dass bei der eingestellten Arbiter-Priorität die maximale Zeitdauer für die Überprüfung einmal überschritten wird, kann beispielsweise im Speicherkontrollelement MC vorgesehen sein, dass ein Alarm ausgelöst wird.

Auf diese Weise kann bei abschätzbaren Applikationsverhalten die Zeitdauer der Überprüfung bzw. die Check-Periode indirekt über die Arbiter-Priorität für die Sicherheitsschnittstelle SP mit zugehöriger Überprüfungsschaltung SA skaliert und der Einfluss des Speicherkontrollelements MC auf die Performance des Computersystems optimiert werden. Zusätzlich können dabei auch geforderte oder vorgegebene Sicherheitsanforderungen eingehalten und Anforderungen und Einstellungen für eine Überprüfung von Daten getrennt von einer Überprüfung von Code-Anteilen durchgeführt werden.

## Patentansprüche

1. Speicherkontrollelement (MC), welches in einem Computersystem einsetzbar ist, und welches auf einer ersten Seite (1), an welche Master-Einheiten (M1, ..., Mn) des Computersystems anschließbar sind, zumindest eine Nutzerschnittstelle (UP1, ..., UPn) mit einer zugehörigen Ansteuerschaltung (UA1, ..., UAn) und auf einer zweiten Seite (2), an welche zumindest ein Speicherelement (S) des Computersystems anschließbar ist, eine Schnittstelle (MPH) mit Protokollhandhabung zum Speicherelement (S) umfasst, und bei welchem für eine Zugriffskontrolle auf das Speicherelement (S) eine digitale Schaltung (AR) für eine Zuteilung von Zugriffsressourcen vorgesehen ist, **dadurch gekennzeichnet, dass** eine zusätzliche Sicherheitsschnittstelle (SP) zu einer Überprüfungsschaltung (SA) vorgesehen ist, welche dazu eingerichtet ist, Daten auf Verfälschungen und Fehler zu überprüfen, festgestellte Fehler zu korrigieren und bei Überschreiten einer einstellbaren Fehlerschwelle einen Alarm auszulösen, und dass ein einstellbares Speicheradressfenster vorgesehen ist, innerhalb welchem Daten für die Sicherheitsschnittstelle (SP) und die Überprüfungsschaltung (SA) als überprüfbar eingestellt sind.

2. Speicherkontrollelement (MC) nach Anspruch 1, **dadurch gekennzeichnet, dass** eine Zeitdauer für die Überprüfung des Speicheradressfensters bei der Sicherheitsschnittstelle (SP) und der zugehörigen Überprüfungsschaltung (SA) einstellbar ist.

3. Speicherkontrollelement (MC) nach einem der Ansprüche 1 oder 2, **dadurch gekennzeichnet, dass** die Überprüfung des Speicheradressfensters von der Sicherheitsschnittstelle (SP) und der zugehörigen Überprüfungsschaltung (SA) periodisch ausführbar ist.

4. Verfahren zur Konfiguration eines Speicherkontrollelements (MC) nach den Ansprüchen 1 bis 3, **dadurch gekennzeichnet, dass** eine Zeitdauer einer Überprüfung des Speicheradressfensters als Sollwert in der Sicherheitsschnittstelle (SP) und der zugehörigen Überprüfungsschaltung (SA) eingestellt wird, und dass daraus einen geeignete Priorität für die Zuteilung von Zugriffsressourcen, eine sogenannte Arbiter-Priorität, für die Sicherheitsschnittstelle (SP) und die zugehörige Überprüfungsschaltung (SA) ermittelt wird.

5. Verfahren zur Konfiguration eines Speicherkontrollelements (MC) nach den Ansprüchen 1 bis 4, **dadurch gekennzeichnet, dass** eine maximale Zeitdauer für eine Überprüfung des Speicheradressfensters aus Rahmenbedingungen, abgeleitet wird, dass dann auf Basis von Tests Applikationsabläufe unter Berücksichtigung von Arbitrierungseigenschaften der Sicherheitsschnittstelle (SP) und der zugehörigen Überprüfungsschaltung (SA) ermittelt werden, dass dann auf Basis der Applikationsabläufe die geeignete Arbiter-Priortät für die Sicherheitsschnittstelle (SP) und die zugehörige Überprüfungsschaltung (SA) bestimmt wird, und dass dann diese ermittelte Arbiter-Priorität fest parametriert wird.

## Claims

1. Memory control element (MC) which can be deployed in a computer system, and which has, on a first side (1), to which master units (M1, ..., Mn) of the computer system can be connected, at least one user interface (UP1,..., UPn) with an associated actuation circuit (UA1,..., UAn) and, on a second side (2), to which at least one memory element (S) of the computer system can be connected, an interface (MPH) with protocol handling to the memory element (S), and in which, for access control to the memory element (S), a digital circuit (AR) for allocating access resources is provided, **characterised in that** an additional safety interface (SP) to a checking circuit (SA) is provided, which is designed to check data for corruption and errors, to correct errors noted and, in the event of an adjustable error threshold being exceeded, to trigger an alarm, and that an adjustable memory address window is provided, within which data for the safety interface (SP) and the checking circuit (SA) is set as being checkable.

2. Memory control element (MC) according to claim 1, **characterised in that** a duration for checking the memory address window can be set in the case of the safety interface (SP) and the associated checking circuit (SA).

3. Memory control element (MC) according to one of claims 1 or 2, **characterised in that** the checking of the memory address window is executed periodically by the safety interface (SP) and the associated checking circuit (SA).

4. Method for configuration of a memory control element (MC) according to claims 1 to 3, **characterised in that** a duration for checking the memory address window can be set as a target value in the safety interface (SP) and the associated checking circuit (SA), and that therefrom an appropriate priority for the allocation of access resources, a so-called arbiter priority, is determined for the safety interface (SP) and the associated checking circuit (SA).

5. Method for configuration of a memory control element (MC) according to claims 1 to 4, **characterised in that** a maximum duration for checking the memory address window is derived from basic parameters, that then on the basis of tests application processes are determined taking into consideration arbitration properties of the safety interface (SP) and the associated checking circuit (SA), that then on the basis of the application processes the appropriate arbiter priority for the safety interface (SP) and the associated checking circuit (SA) is determined, and that then said identified arbiter priority is fixedly parameterised.

## Revendications

1. Élément de contrôle de mémoire (MC) qui peut être inséré dans un système informatique, et qui comprend sur un premier côté (1), auquel peuvent être reliées des unités-maîtres (M1, ..., Mn) du système informatique, au moins une interface utilisateur (UP1, ..., UPn) avec un circuit de commande associé (UA1, ..., UAn), et sur un deuxième côté (2), auquel peut être relié au moins un élément de mémoire (S) du système informatique, une interface (MPH) avec un traitement de protocole, à l'élément de mémoire (S), et dans lequel est prévu, pour un contrôle d'accès à l'élément de mémoire (S), un circuit numérique (AR) pour une attribution des ressources d'accès, **caractérisé en ce qu'**il est prévu une interface de sécurité (SP) supplémentaire pour un circuit de vérification (SA), qui est destiné à vérifier les données de falsifications et d'erreurs, à corriger les erreurs détectées et, lors d'un dépassement d'un seuil d'erreur réglable, à déclencher une alarme, et **en ce qu'**il est prévu une fenêtre d'adresse de mémoire réglable à l'intérieur de laquelle sont ajustées en tant que vérifiables, les données pour l'interface de sécurité (SP) et le circuit de vérification (SA).

2. Élément de contrôle de mémoire (MC) selon la revendication 1, **caractérisé en ce qu'**un espace de temps pour la vérification de la fenêtre d'adresse de mémoire est réglable dans l'interface de sécurité (SP) et le circuit de vérification (SA) associé.

3. Élément de contrôle de mémoire (MC) selon l'une des revendications 1 et 2, **caractérisé en ce que** la vérification de la fenêtre d'adresse de mémoire de l'interface de sécurité (SP) et du circuit de vérification (SA) associé est réalisable périodiquement.

4. Procédé de configuration d'un élément de contrôle de mémoire (MC) selon les revendications 1 à 3, **caractérisé en ce que** l'on règle un espace de temps d'une vérification de la fenêtre d'adresse de mémoire comme valeur de consigne dans l'interface de sécurité (SP) et le circuit de vérification (SA) associé, et **en ce que** l'on détermine alors une priorité appropriée pour l'attribution des ressources d'accès, une priorité dite d'arbitrage, pour l'interface de sécurité (SP) et le circuit de vérification (SA) associé.

5. Procédé de configuration d'un élément de contrôle de mémoire (MC) selon les revendications 1 à 4, **caractérisé en ce que** l'on déduit un espace de temps maximal pour une vérification de la fenêtre d'adresse de mémoire à partir de conditions de base, **en ce qu'**ensuite, sur la base de tests, sont déterminées les procédures d'application en considération des propriétés d'arbitrage de l'interface de sécurité (SP) et du circuit de vérification (SA) associé, **en ce qu'**ensuite, sur la base des procédures d'application, on fixe la priorité d'arbitrage appropriée pour l'interface de sécurité (SP) et le circuit de vérification (SA) associé, et **en ce qu'**ensuite la priorité d'arbitrage déterminée est paramétrée définitivement.
